Europäisches Patentamt

European Patent Office

Office européen des brevets

(19)

(11) Veröffentlichungsnummer: **0 168 742**
**B1**

(12) **EUROPÄISCHE PATENTSCHRIFT**

(45) Veröffentlichungstag der Patentschrift:
06.09.89

(51) Int. Cl.⁴: **H 02 K 5/14**

(21) Anmeldenummer: 85108429.3

(22) Anmeldetag: 08.07.85

(54) Kommutatorseitiges Lagerschild für Gleichstrom-Kleinstmotoren.

(30) Priorität: 16.07.84 DE 3426125

(43) Veröffentlichungstag der Anmeldung:
22.01.86 Patentblatt 86/4

(45) Bekanntmachung des Hinweises auf die Patenterteilung:
06.09.89 Patentblatt 89/36

(84) Benannte Vertragsstaaten:
AT DE FR GB NL

(56) Entgegenhaltungen:
US-A- 2 514 693
US-A- 3 234 417
US-A- 4 355 253

(73) Patentinhaber: Braun Aktiengesellschaft,
Rüsselsheimer Strasse 22, D-6000 Frankfurt/Main (DE)

(72) Erfinder: Treblitz, Bernd, Dr., Mayers Gärten 13,
D-6240 Königstein (DE)
Erfinder: Tewes, Bernd, Am Wald 1,
D-6200 Wiesbaden-Medenbach (DE)
Erfinder: Klawuhn, Manfred, Leerbachstrasse 62,
D-6000 Frankfurt/Main (DE)

(74) Vertreter: Einsele, Rolf, Braun Aktiengesellschaft
Postfach 1120 Frankfurter Strasse 145, D-6242 Kronberg
Taunus (DE)

## Beschreibung

Gegenstand der Erfindung ist ein kommutatorseitiges Lagerschild für Gleichstrom-Kleinstmotoren, dessen Grundkörper, Lagergehäuse und Aufnahmen für die Stromübertragungseinrichtungen als einstückiges Kunststoffspritzteil ausgebildet sind.

Aus der DE-PS 2 607 103 ist es bekannt, den Grundkörper und die beiden Träger für die Stromübertragungseinrichtungen (Kohlenbürste, Kohlenführung, Andruckfeder, Anschlußlötfahne) als einstückiges Kunststoffspritzteil auszubilden, wobei die Träger mit dem Grundkörper schwenkbeweglich verbunden sind, derart, daß die mit der Stromübertragungseinrichtung bestückten Träger im Zuge der Endmontage in den Grundkörper einschwenkbar sind.

Bei dieser Ausführungsform wird das Lagerschild vor der Endmontage mit den Stromübertragungseinrichtungen bestückt. Hierzu ist im Bereich des freien Endes eines Trägers ein Dorn vorgesehen, auf den die Andruckfeder für die Kohle aufgebracht wird. Außerdem sind verhältnismäßig aufwendige Mittel vorgesehen um das Herausgleiten der Kohlen aus den Kohlenführungen vor der Endmontage zu verhindern.

Aufgabe der Erfindung ist es, den Aufwand und die Kosten für die Herstellung des Lagerschilds sowie die Montagekosten weiter zu senken.

Diese Aufgabe wird dadurch gelöst, daß die Aufnahmen für die Stromübertragungseinrichtungen mit dem Grundkörper starr verbunden sind und daß an das Lagerschild Deckel mittels Folienscharnieren einstückig angespritzt sind, wobei die Aufnahmen für die Stromübertragungseinrichtungen und die Deckel so ausgestaltet sind, daß die Deckel an den den Folienscharnieren gegenüberliegenden Enden einklipsbar sind.

Hierdurch wird nicht nur die Montage, sondern auch das eventuelle nachträgliche Austauschen der Stromübertragungseinrichtungen vereinfacht.

In einer Ausgestaltung der Erfindung weist das Lagerschild an seinem dem Stator zugewandten Umfang Rastmittel auf, die zur Einrastung in einen mit entsprechenden Ausnehmungen versehenen, gespritzten Kunststoffmagneten oder in einen zusammen mit dem Kunststoffmagneten gespritzten Rückschluß dienen.

Hierdurch wird die Mittelachse des Lagergehäuses zu der Mittelachse des ringförmigen oder ringsegmentförmigen Magneten genau fixiert, so daß in einer weiteren Ausgestaltung der Erfindung das Lager für die Rotorwelle bei der Herstellung des Lagerschilds in dieses integriert und als Zylinderlager ausgebildet werden kann, wobei zum Ausgleich des eventuellen Winkelversatzes zwischen Rotorwelle und Lager bzw. Lagergehäuse die Lageranbindung an den Grundkörper des Lagerschilds flexibel ausgestaltet ist.

Noch weitere Ausgestaltungen sind in den übrigen Unteransprüchen beschrieben.

Im folgenden wird die Erfindung an Hand von zwei in der Zeichnung dargestellten Ausführungsbeispielen näher erläutert.

In Fig. 1 und 2 ist ein mit Metallbürsten zu bestückendes Lagerschild, und

in Fig. 3 und 4 ein mit Kohlebürsten zu bestückendes Lagerschild, jeweils in perspektivischer Ansicht dargestellt, wobei Fig. 1 und 3 die dem Stator abgewandte Seite und Fig. 2 und 4 die dem Stator zugewandte Seite zeigt.

In Fig. 5 ist im Schnitt ein Lagerschild gemäß Fig. 3 und 4, das in einen Kunststoffmagneten eingeklipst ist, dargestellt.

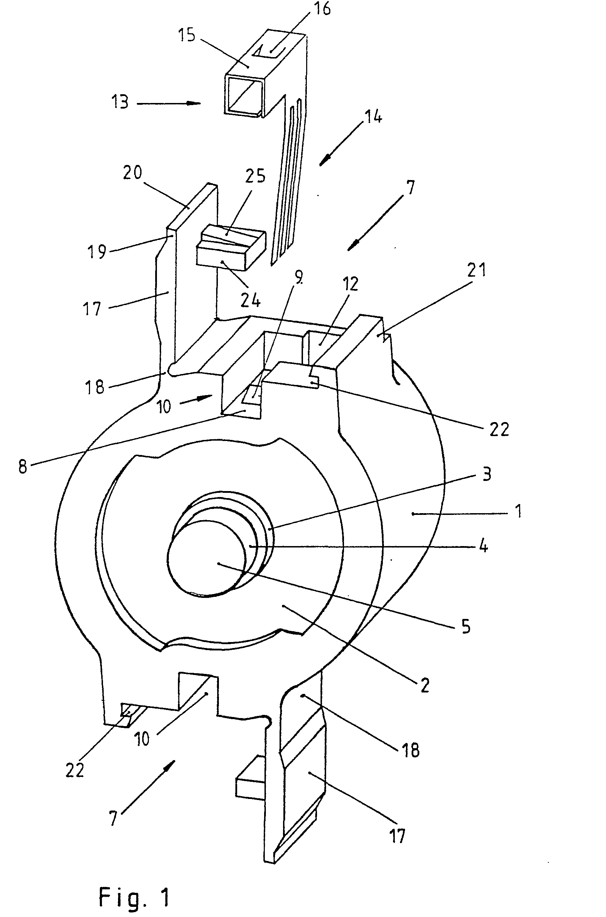

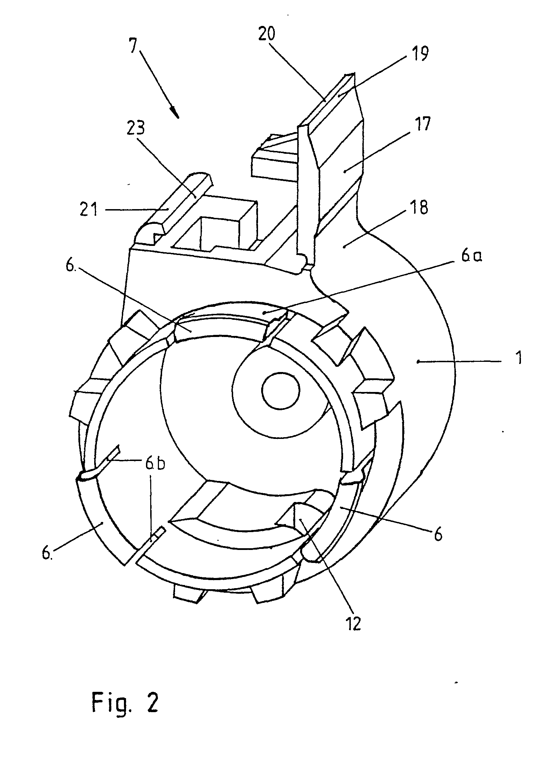

Das einstückige Lagerschild für Metallbürsten in Fig. 1 und 2 besteht im wesentlichen aus dem Grundkörper 1, der Ausgleichsfolie 2, dem Lagergehäuse 3, dem Zylinderlager 4, der Anlaufscheibe 5, den beiden Aufnahmen 7 für die Stromübertragungseinrichtungen (Metallbürsten 13) und den beiden Deckeln 17.

Die Metallbürste 13 besteht hier aus einem gebogenen Metallstreifen mit kastenförmigem Träger 15 und Fingern 14. Auf der Ober- und Unterseite des Trägers 15 ist je eine nach innen gebogene Lasche 16 ausgestanzt, die zur Festklemmung eines Anschlußdrahts dienen. Die Bürsten werden nach dem Zusammenbau des Motors in den Rechteckschacht 10 eingelegt, wobei die Finger 14 durch die Aussparung 12 am Kollektor des Rotors anliegen. Dabei liegt die Unterseite des Trägers 15 der Bürste 13 auf der Fläche 8 des Rechteckschachtes 10 auf.

Beim Schließen des Deckels 17, der mittels Folienscharnieren 18 am Grundkörper 1 des Lagerschilds angespritzt ist, wird die Bürste 13 zum Kollektor fixiert. Dies geschieht zum einen durch die rampenförmige Erhebung 9 auf der Auflagefläche 8, auf der die Lasche 16 der Unterseite des Trägers 15 aufliegt, und zum anderen durch den am Deckel 17 angebrachten, mit einer Versteifungsrippe 25 versehenen Steg 24, der in die Aussparung 12 greift und den Träger 15 der Bürste 13 teilweise umschließt, wodurch außerdem der Bürstenandruck an den Kollektor exakt eingehalten wird.

Der Deckel 17 ist an seinem vorderen Ende mit einer Nase 19 versehen, die in geschlossenem Zustand in den Hintergriff 22 der am Grundkörper 1 angebrachten Haltevorrichtung 21 eingreift. Das Einschnappen wird durch die Anlaufschräge 20 an der Nase 19 und durch die Einführschräge 23 an der Haltevorrichtung 21 erleichtert.

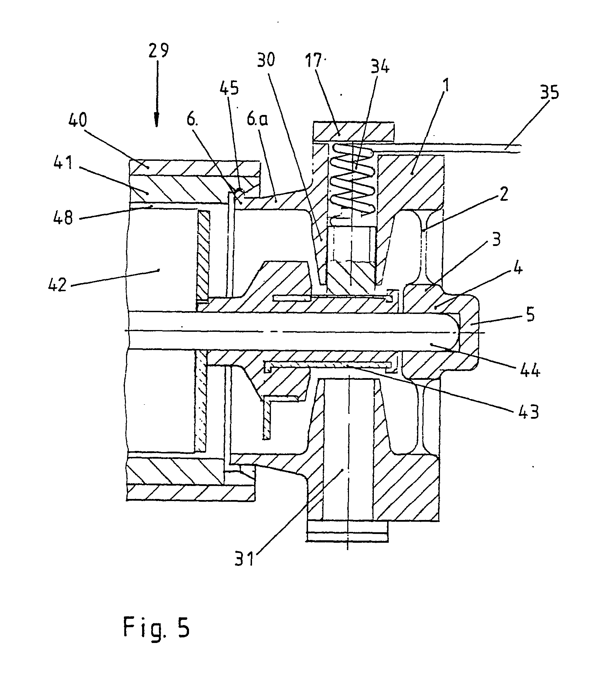

An der dem Stator zugewandten Umfang des Grundkörpers 1 sind über Verbindungsstege 6a Rastmittel angebracht, die in diesem Fall aus drei gleichmäßig am Umfang des Grundkörpers angebrachten Nasen 6 bestehen. Diese Rastnasen 6 schnappen bei der Montage des Motors direkt in entsprechende Ausnehmungen 45 eines ringförmigen oder ringsegmentförmigen, gespritzten Kunststoffmagneten 41 ein (siehe auch Fig. 5). Die Rastnasen 6 bzw. die Verbindungsstege 6a sind jeweils durch Entlastungsschlitze 6b begrenzt, wobei mit der Tiefe der Entlastungsschlitze 6b die Klipseigenschaften weitestgehend bestimmt werden. Die Formgebung der Rastnasen 6 und deren Verbindungsstege 6a zum Grundkörper 1 beeinflussen die Rastung.

Da sowohl der Kunststoffmagnet als auch das Lagerschild einstückig gespritzte Teile sind und somit verhältnismäßig geringe Herstellungstoleranzen aufweisen, kann infolge des direkt in den Magneten geklipsten Lagerschilds das Lager 4 als Zylinderlager ausgebildet und in das Lagerschild bzw. in das Lagergehäuse 3 integriert werden, das heißt zusammen mit dem Lagerschild einstückig gespritzt werden.

Obwohl die Herstellung und Montage des Lagerschilds wesentlich vereinfacht ist, kann ein geringer Luftspalt 48 zwischen Rotor 42 und Magnet 41 und somit ein guter Wirkungsgrad erreicht werden. Ein eventueller Winkelversatz zwischen der Mittelachse des Magneten und des Zylinderlagers 4 wird durch die flexibel ausgestaltete Ausgleichsfolie 2 zwischen dem Lagergehäuse 3 bzw. dem Lager 4 und dem Grundkörper 1 ausgeglichen.

Die Anlaufscheibe 5 für die Welle 44 des Rotors 42 ist ebenfalls mit in das Lagerschild integriert.

Bei einem Motor, dessen Rückschluß 40 zusammen mit dem Kunststoffmagneten 41 gespritzt ist, erhält man auch eine mit nur geringen Toleranzen behaftete Zuordnung der Achse des Rückschlusses zur Achse des Magneten, so daß in diesem Fall auch eine Klipsung des Lagerschilds in entsprechende Ausnehmungen des Rückschlusses möglich ist (nicht dargestellt). In beiden Fällen ist das Lagerschild verdrehsicher und genau fixiert.

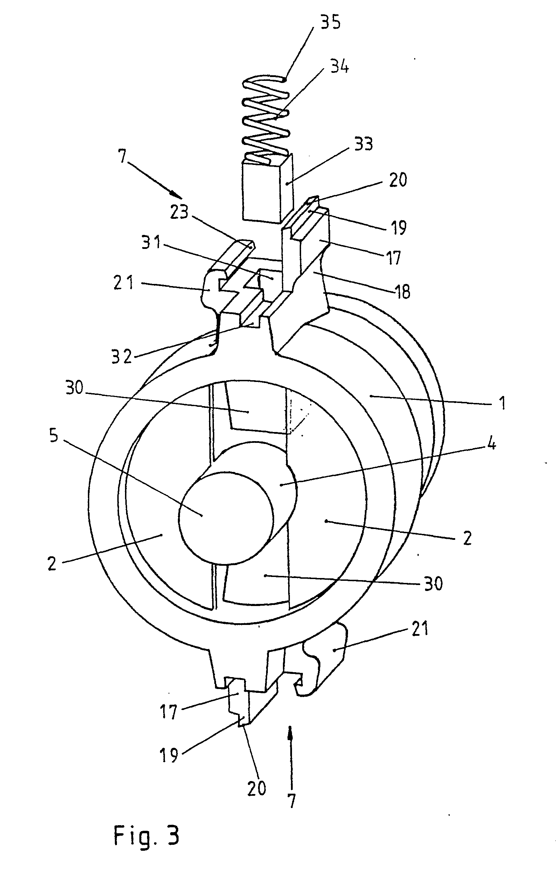

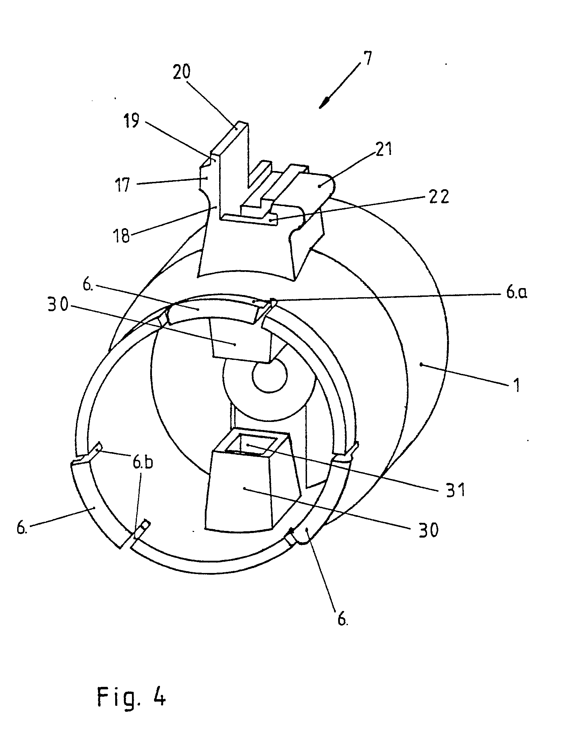

In Fig. 3, 4 und 5 ist ein Ausführungsbeispiel eines Lagerschilds dargestellt, das sich zur Aufnahme von Kohlenbürsten eignet. Der prinzipielle Aufbau dieses Lagerschilds ist derselbe wie der des in Fig. 1 und 2 dargestellten Lagerschilds, weshalb für gleiche Teile die gleichen Bezugszeichen verwendet werden.

Zur Aufnahme der Kohlebürste 33 dient hier ein Stück 31 einer Kohleführung 30. Dieser Schacht ist, ebenso wie die anderen teile des Lagerschilds, ebenfalls einstückig mit dem Grundkörper 1 hergestellt. Zusammen mit der Kohle 33 wird die Andruckfeder 34 in den Schacht 31 eingelegt und dann mit dem Deckel 17 wie in Fig. 1 und 2 verschlossen. Durch die Ausnehmungen 32 kann das (verlängerte) Ende 35 der Feder 34 zur Stromzuführung herausgeführt werden.

Die Ausgleichsfolie 2 ist hier aus spritztechnischen Gründen geteilt, erfüllt aber trotzdem dieselbe Aufgabe wie im vorhergenannten Ausführungsbeispiel. Ebenso sind federnde Rastnasen 6 zur Klipsung in den Magneten oder den Rückschluß des Motors vorgesehen.

Bezugszeichenliste
1 Grundkörper
2 Ausgleichsfolie
3 Lagergehäuse
4 Lager (Zylinderlager)
5 Anlaufscheibe
6 Rastnasen
6a Verbindungsstege
6b Entlastungsschlitz
7 Aufnahmen für die Stromübertragungseinrichtungen (als ganzes)
8 Auflagefläche für Bürste
9 Nase für Bürstenzentrierung (Erhebung)
10 Rechteckschacht
11
12 Aussparung (zur Einführung der Bürstenfinger)
13 Bürste (Metallbürste oder Fingerbürste)
14 Finger (der Bürste 13)
15 Träger (der Bürste 13)
16 Federelement
17 Deckel
18 Folienscharnier
19 Nase (des Deckels 17)
20 Anlaufschräge
21 Haltevorrichtung
22 Hintergriff
23 Einführschräge
24 Steg
25 Versteifungsrippe
29 Stator
30 Kohleführung
31 Schacht
32 Ausnehmung
33 Kohle
34 Feder
35 Federende
40 Rückschluß
41 Kunststoffmagnet
42 Rotor
43 Kollektor
44 Welle (Rotorwelle)
45 Ausnehmungen im Kunststoffmagnet 41

**Patentansprüche**

1. Kommutatorseitiges Lagerschild für Gleichstrom-Kleinstmotoren, dessen Grundkörper (1), Lagergehäuse (3) und Aufnahmen (7) für die Stromübertragungseinrichtungen (13, 33) als einstückiges Kunststoffspritzteil ausgebildet sind, dadurch gekennzeichnet, daß die Aufnahmen (7) für die Stromübertragungseinrichtungen (13, 33) mit dem Grundkörper (1) starr verbunden sind und daß an das Lagerschild Deckel (17) mittels Folienscharnieren (18) einstückig angespritzt sind, wobei die Aufnahmen (7) für die Stromübertragungseinrichtungen und die Deckel (17) so ausgestaltet sind, daß die Deckel (17) an den den Folienscharnieren (18) gegenüberliegenden Enden einklipsbar sind.

2. Kommutatorseitiges Lagerschild nach Anspruch 1, dadurch gekennzeichnet, daß das Lagerschild an seinem dem Stator (29) zugewandten Umfang Rastmittel aufweist, die zur Einrastung in einen mit entsprechenden Ausnehmungen (45) versehenen, gespritzten Kunststoffmagneten (41) oder in einen zusammen mit dem Kunststoffmagneten gespritzten Rückschluß (40) dienen.

3. Kommutatorseitiges Lagerschild nach Anspruch 2, dadurch gekennzeichnet, daß die Rastmittel aus gleichmäßig am Umfang angebrachten, gegenüber dem Grundkörper (1) mittels eines Verbindungsstegs (6a) federnden Rastnasen (6) bestehen, wobei die Rastnasen (6) jeweils durch Entlastungsschlitze (6b) begrenzt sind.

4. Kommutatorseitiges Lagerschild nach Anspruch 2, dadurch gekennzeichnet, daß ein als Zylinderlager ausgebildetes Lager (4) für die Rotorwelle (44) in das Lagergehäuse (3) bei der Herstellung des Lagerschilds eingespritzt und die Lageranbindung (2) des Lagergehäuses (3) an den Grundkörper (1) flexibel ausgestaltet ist.

5. Kommutatorseitiges Lagerschild nach Anspruch 4, dadurch gekennzeichnet, daß das Lager (4) einstückig mit dem Lagerschild gespritzt ist.

6. Kommutatorseitiges Lagerschild nach Anspruch 4 oder 5, dadurch gekennzeichnet, daß die Anlaufscheibe (5) für die Welle (44) des Rotors (42) einstückig mit dem Lagerschild gespritzt ist.

7. Kommutatorseitiges Lagerschild für Metallbürsten nach Anspruch 1, dadurch gekennzeichnet, daß die Aufnahmen (7) für die Stromübertragungseinrichtungen und/oder die Deckel (17) Mittel zur Fixierung der Stromübertragungseinrichtungen derart enthalten, daß nach Verschließen des Deckels (17) die eingelegten Stromübertragungseinrichtungen bezüglich des Kollektors (43) des Rotors (42) fixiert sind.

8. Kommutatorseitiges Lagerschild nach Anspruch 7, dadurch gekennzeichnet, daß an der Innenseite der Deckel (17) ein Steg (24) angebracht ist, der einen aus einem Metallstreifen gebogenen, hohlförmig ausgebildeten Träger (15) der in einen entsprechend ausgebildeten Schacht (10) beziehungsweise Aussparung (12) eingelegten Bürste (13) ganz oder teilweise umschließt.

9. Kommutatorseitiges Lagerschild nach Anspruch 7, dadurch gekennzeichnet, daß auf der Bürstenkörperauflagefläche (8) des Schachtes (10) eine Erhebung (9) vorgesehen ist, die in eine Aussparung des Bürstenkörpers (15) eingreift.

## Claims

1. A commutator-side bearing bracket for miniature direct current motors having a body (1), a bearing housing (3) and mounts (7) for the current transmission means (13, 33) which are constructed as a one-piece injection moulded part, characterized in that the mounts (7) for the current transmission means (13, 33) are rigidly connected to the body (1) and that covers (17) are formed in one piece with the bearing bracket and are pivotally connected thereto by means of foil hinges (18), the mounts (7) for the current transmission means and the covers (17) being constructed in such a way that the covers can be clipped onto the ends facing the foil hinges (18).

2. A commutator-side bearing bracket according to claim 1, characterized in that the bearing bracket is provided on its circumference facing the stator (29) with locking means which serve to engage in an injection moulded plastic magnet (41) provided with corresponding recesses (45), or in a yoke (40) injection moulded together with the plastic magnet.

3. A commutator-side bearing bracket according to claim 2, characterized in that the locking means comprise locking noses (6) fitted uniformely around the circumference of the bearing bracket and which are resilient with respect to the body (1) by means of respective connecting webs (6a), the locking noses (6) being in each case defined by relief slots (6b).

4. A commutator-side bearing bracket according to claim 2, characterized in that a bearing (4) for a rotor shaft (44) and constructed as a journal bearing is injected into the bearing housing (3) during the production of the bearing bracket and that the bearing housing (3) is connected to the body (1) by a flexible connection (2).

5. A commutator-side bearing bracket according to claim 4, characterized in that the bearing (4) is injection moulded in one piece with the bearing bracket.

6. A commutator-side bearing bracket according to claim 4 or 5, characterized in that an abument disc (5) for the shaft (44) of the rotor (42) is injection moulded in one piece with the bearing bracket.

7. A commutator-side bearing bracket for metal brushes according to claim 1, characterized in that the mounts (7) for the current transmission means and/or the covers (17) contain means for fixing the current transmission means in such a way that after closing the covers (17), the inserted current transmission means are fixed with respect to the commutator (43) of the rotor (42).

8. A commutator-side bearing bracket according to claim 7, characterized in that a web (24) is provided on the inside of the cover (17) and in that a hollow support (15) bent from a metal strip and which wholly or partly surrounds a brush (13) is inserted in a correspondingly constructed recess (10) or channel (12).

9. A commutator-side bearing bracket according to claim 7, characterized in that a projection (9) is provided on the brush eddy bearing surface (8) of the recess (10) and engages in a recess in the brush support (15).

## Revendications

1. Flasque de palier pour le côté collecteur de micromoteurs à courant continu, dont le corps de base (1), le logement de palier (3) et les logements (7) pour les moyens de transmission de courant (13, 33) sont réalisés sous la forme d'une pièce d'un seul tenant en matière plastique moulée par injection, caractérisé par le fait que les logements (7) pour les moyens de transmission de courant (13, 33) sont rigidement liés au corps de base (1) et par le fait que des couvercles (17) sont moulés par injection en ne formant qu'une seule pièce avec le flasque auquel ils sont rattachés au moyen de charnières à feuille (18), les logements (7) pour les moyens de transmission de courant et les couvercles (17) étant constitués de manière que les couvercles (17) puissent être enclenchés en leurs extrémités opposées aux charnières en feuille (18).

2. Flasque de palier pour côté collecteur selon revendication 1, caractérisé par le fait qu'en son pourtour tourné vers le stator (29), le flasque présente des moyens d'enclenchement qui servent au verrouillage-enclenchement dans un aimant en matière plastique moulé par injection (41), muni d'évidements correspondants (45), ou dans un organe de retour de flux (40) moulé par injection conjointement avec l'aimant en matière plastique.

3. Flasque de palier pour côté collecteur selon revendication 2, caractérisé par le fait que les moyens d'enclenchement sont constitués par des nez d'enclenchement (6) disposés régulièrement sur le pourtour, déformables élastiquement par rapport au corps de base (1) au moyen d'une âme de liaison (6a), chaque nez d'enclenchement (6) étant délimité par des fentes d'allégement de contrainte (6b).

4. Flasque de palier pour côté collecteur selon revendication 2, caractérisé par le fait qu'un palier (4) réalisé en tant que palier cylindrique pour l'arbre rotorique (44) est formé dans le logement de palier (3), par moulage par injection lors de la fabrication du flasque, la liaison (2) du logement de palier (3) au corps de base (1) étant réalisée flexible.

5. Flasque de palier pour côté collecteur selon revendication 4, caractérisé par le fait que le palier (4) est moulé par injection en ne formant qu'une seule pièce avec le flasque.

6. Flasque de palier pour côté collecteur selon revendication 4 ou 5, caractérisé par le fait que la plaque portante (5) pour l'arbre (44) du rotor (42) est moulée par injection en ne formant qu'une seule pièce avec le flasque.

7. Flasque de palier pour côté collecteur pour des balais métalliques selon revendication 1, caractérisé par le fait que les logements (7) pour les moyens de transmission de courant et/ou les couvercles (17) comportent des moyens pour la fixation des moyens de transmission de courant de telle sorte qu'après fermeture du couvercle (17) les moyens de transmission de courant insérés sont fixés par rapport au collecteur (43) du rotor (42).

8. Flasque de palier pour côté collecteur selon revendication 7, caractérisé par le fait que sur la face interne des couvercles (17) une barrette (24) est agencée qui entoure entièrement ou partiellement un support (15) du balai (13) inséré dans une partie creuse (10) de forme correspondante et/ou un évidement (12), ledit support (15) étant plié par une bande métallique et réalisé en forme de creux.

9. Flasque de palier pour côté collecteur selon revendication 7, caractérisé par le fait que sur la surface d'appui par le corps du balai (8) de la partie creuse (10) un nez (9) est prévu qui s'engage dans un évidement du corps de balai (15).

Fig. 1

Fig. 2

Fig. 3

Fig. 4

Fig. 5